# EUROPEAN PATENT APPLICATION

(11) **EP 4 491 515 A1**
(43) Date of publication of application: **15.01.2025**
(21) Application number: 24183560.2
(22) Date of filing: 20.06.2024
(51) Int. Cl.: B64D 11/06, B60N 2/14

(54) **PASSENGER SUITE ACCESS FOR PERSONS WITH REDUCED MOBILITY**

(30) Priority: 10.07.2023 IN 202311046247; 11.01.2024 US 202418410151
(71) Applicant: B/E Aerospace, Inc., Winston-Salem, NC 27105 (US)
(72) Inventor: KODATI, Sambasiva Rao, Vinjaram (IN); KOTTAKAPU, Prakash Reddy, Karnataka (IN)
(74) Representative: Dehns

(57) **Abstract**

A motion assembly (100) for moving a passenger seat (102) from a first location to a second location, for instance to facilitate seating persons with reduced mobility. In embodiments, the motion assembly (100) includes a first subassembly (106) for linear motion in a first direction, a second subassembly (108) for linear motion in a second direction, and a third subassembly (110) for rotational motion, the third subassembly (110) positioned between and interconnecting the first and second subassemblies (106, 108), wherein an amount of rotational motion of the third subassembly (110) determines an angle of the second direction relative to the first direction. In some embodiments, the passenger seat (102) is located in a suite (200) and requires motion in at least two directions to move the seat (102) from within the suite (200) to the suite entrance (210).

## Description

### TECHNICAL FIELD AND BACKGROUND

The present disclosure relates generally to travel accommodations for persons with reduced mobility (PRM), and more particularly, to a motion assembly for a passenger seat configured to move the passenger seat in at least two directions to facilitate seating a PRM. In some embodiments, the motion assembly operates to move a passenger seat from a first location within a passenger suite to a second location within the suite entrance to facilitate passenger transfer at the aisle.

Persons with reduced mobility (PRM) require special equipment and crew assistance when transferring from a wheelchair to an approved passenger seat. In the case of airliners, transfer wheelchairs may be used to navigate narrow aisles when boarding and deplaning a PRM. Seats for accommodating a PRM are typically located at the end of a seat row adjacent to an aisle for convenient transfer. In use, the seat armrest may be configured to lower to seat bottom level to facilitate lateral transfer from the wheelchair to the passenger seat.

Some airliners may be equipped with premium class cabins including individual passenger suites. Such passenger suites may include a suite entrance positioned apart from and at an angle to a passenger seat within the suite. For example, in a particular suite configuration, the passenger seat may be positioned along one suite wall and oriented in one direction, while the suite entrance may be provided through a different wall and opening in a different direction. Such a suite configuration does not allow for direct transfer from a wheelchair to the passenger seat considering the distance and angle of the passenger seat relative to the suite entrance. In such a configuration, crew assistance is needed to physically lift and move the passenger from the transfer wheelchair to the passenger seat within the suite, which is disruptive to the PRM and invites injury to both the PRM and cabin crew.

Therefore, what is needed is a mechanism for moving a passenger seat from one location to a temporary transfer location to facilitate PRM transfer at a safer and more convenient location.

### BRIEF SUMMARY

In one aspect, embodiments of the inventive concepts disclosed herein are directed to a motion assembly for a passenger seat. In embodiments, the motion assembly includes a first subassembly for linear motion in a first direction, a second subassembly for linear motion in a second direction, and a third subassembly for rotational motion, the third subassembly positioned between and interconnecting the first and second subassemblies, wherein an amount of rotational motion of the third subassembly determines an angle of the second direction relative to the first direction.

In some embodiments, the first subassembly includes a platform translatably mounted to spaced beams, the third subassembly includes a swivel plate mounted to the platform and a swivel ring rotatably mounted to the swivel plate, and the second subassembly includes a platform mounted to the swivel ring and spaced beams translatably mounted to the platform.

In some embodiments, the spaced beams of the first subassembly are components of a first frame assembly attachable to seat tracks, and the spaced beams of the second subassembly are components of a second frame assembly attachable to the passenger seat.

In some embodiments, the swivel ring is configured to rotate within the swivel plate, the swivel ring has a radially extending feature, the swivel plate has an annular track of a predetermined length determinative of an amount of rotation of the swivel ring relative to the swivel plate, and the radially extending feature is configured, as the swivel ring rotates relative to the swivel plate, to travel within the annular track.

In some embodiments, the third subassembly is configured for up to 90-degrees of rotation such that the second direction is orthogonal to the first direction.

In some embodiments, the motion assembly is configured for sequential operation in that the first subassembly is configured to operate first to provide linear motion in the first direction, the third subassembly is configured to operate second to provide rotational motion, and the second assembly is configured to operate third to provide linear motion in the second direction.

In some embodiments, the third subassembly is configured to operate after linear motion of the first subassembly ceases, and the second subassembly is configured to operate after rotational motion of the third subassembly ceases.

According to another aspect, the inventive concepts disclosed herein are directed to a passenger seat assembly. In embodiments, the passenger seat assembly includes a passenger seat, seat tracks, and a motion assembly coupled between the passenger seat and the seat tracks. In embodiments, the motion assembly includes a first subassembly for linear motion in a first direction, the first subassembly coupled to the seat tracks, a second subassembly for linear motion in a second direction, the second subassembly coupled to the passenger seat, and a third subassembly for rotational motion, the third subassembly positioned between and interconnecting the first and second subassemblies, wherein an amount of rotational motion of the third subassembly determines an angle of the second direction relative to the first direction.

According to a further aspect, the inventive concepts disclosed herein are directed to a passenger suite. In embodiments, the passenger suite includes upstanding walls defining an interior space, an entrance provided through one of the upstanding walls, and a passenger seat positioned within the interior space. In embodiments, the passenger seat includes a motion assembly configured to move the passenger seat from a first position within the interior space to a second position within the entrance, wherein movement from the first position to the second position includes at least one direction change. In embodiments, the motion assembly includes a first subassembly for linear motion in a first direction, the first subassembly coupled to seat tracks of the passenger seat, a second subassembly for linear motion in a second direction, the second subassembly coupled to the passenger seat, and a third subassembly for rotational motion, the third subassembly positioned between and interconnecting the first and second subassemblies, wherein an amount of rotational motion of the third subassembly determines an angle of the second direction relative to the first direction.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is an isometric view of a motion assembly for a passenger seat, in accordance with example embodiments of this disclosure;
FIG. 2 is an exploded view of the motion assembly shown in FIG. 1;
FIG. 3 is an isometric view of a linear motion subassembly of the assembly shown in FIG. 1;
FIG. 4 is an isometric view of a rotational motion subassembly of the assembly shown in FIG. 1;
FIG. 5 is an overhead plan view of a passenger suite showing a passenger seat in each of a travel and a temporary transfer position, and a motion path of the passenger seat;
FIG. 6 is an overhead plan view of a passenger suite showing a passenger seat in each of a travel and a temporary transfer position of a different orientation, and a motion path of the passenger seat;
FIG. 7 is a perspective view of a passenger suite showing a passenger seat in a travel position; and
FIG. 8 is a perspective view of a passenger suite showing a passenger seat in a transfer position within the suite entrance.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a motion assembly for a passenger seat, a passenger seat including a motion assembly, and a passenger suite including a passenger suite equipped with a motion assembly. In some implementations, the passenger seat is a premium class passenger seat in an airliner. In use, the motion assembly is capable of moving the passenger seat between a first position and a second position, wherein the first position corresponds to the travel position of the seat and the second position corresponds to a temporary position, for instance to position the passenger seat in a location convenient for transferring a PRM passenger from a wheelchair to the passenger seat. In some implementations, the second position is within a suite entrance at the aisle.

In embodiments, the motion assembly includes linear motion subassemblies coupled through a rotational motion subassembly. A first linear motion subassembly operates to provide linear motion in a first direction. The rotational motion subassembly operates to rotate a second linear motion subassembly relative to the first linear motion subassembly. The second linear motion subassembly operates to provide linear motion in a second direction different from the first direction. For example, the first linear motion subassembly may operate to translate a passenger seat in a forward direction, the rotational motion subassembly may operate to rotate the passenger seat, and the second linear motion subassembly may operate to translate the passenger seat in a lateral direction relative to the forward direction. As such, the motion assembly can operate to move a seat from its travel location within a suite to a suite entrance while also rotating the seat to an orientation convenient for PRM transfer.

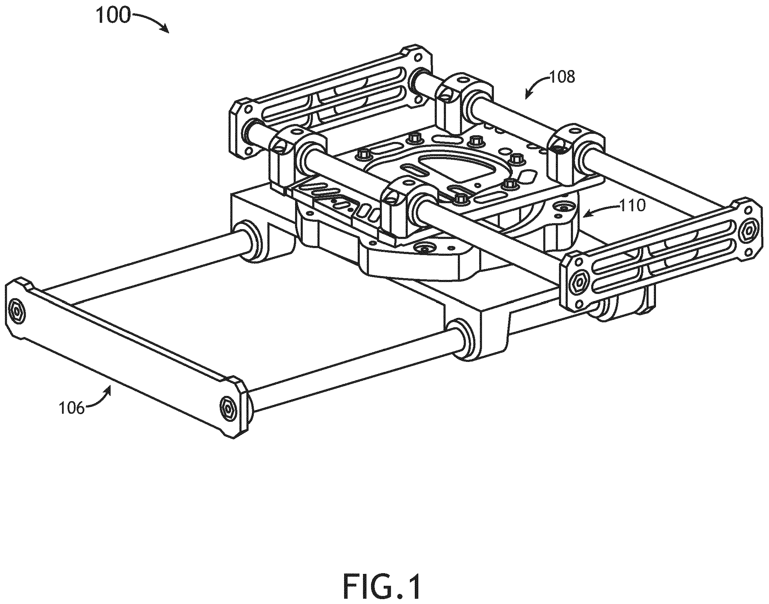

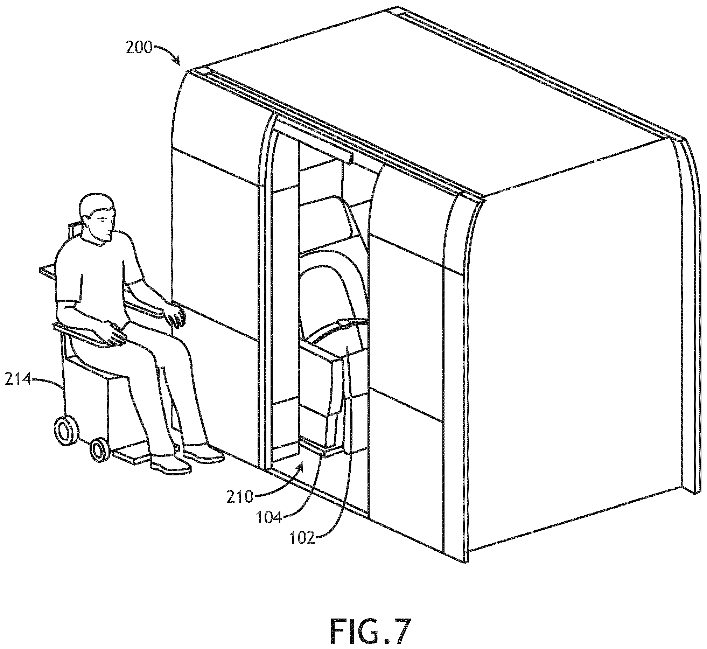

FIG. 1 illustrates a motion assembly 100 according to the present disclosure. The motion assembly 100 operates to move an object from a first location to at least one second location along at least one motion path. According to the present disclosure, the motion assembly 100 is configured to move a passenger seat. The motion assembly 100 is coupled between the passenger seat (see 102 in FIG. 7) and fixed seat tracks (see 104 in FIG. 7) in the case of an airliner passenger seat. The passenger seat 102 generally includes frame elements supporting a seat bottom and a backrest, and in some embodiments at least one armrest. The seat tracks 104 generally include structure fixed to the floor. The motion assembly 100 operates to move the passenger seat 102 relative to the seat tracks 104.

As shown in FIG. 1, the motion assembly 100 generally includes a first subassembly 106 for providing linear motion in a first direction, a second subassembly 108 for providing linear motion in a second direction, and a third subassembly 110 for providing rotational motion between the first and second subassemblies 106, 108. The third subassembly 110 is positioned between and interconnects the first and second subassemblies 106, 108, and an amount of rotational motion provided by the third subassembly 110 determines an angle of the second direction relative to the first direction. As shown, the third subassembly is mounted atop the first subassembly 106, the second subassembly 108 is mounted atop the third subassembly 110, and the third subassembly 110 is configured to provide rotational motion up to about 90 degrees such that the linear motion of the second subassembly 108 can be made perpendicular to the linear motion of the first subassembly 106.

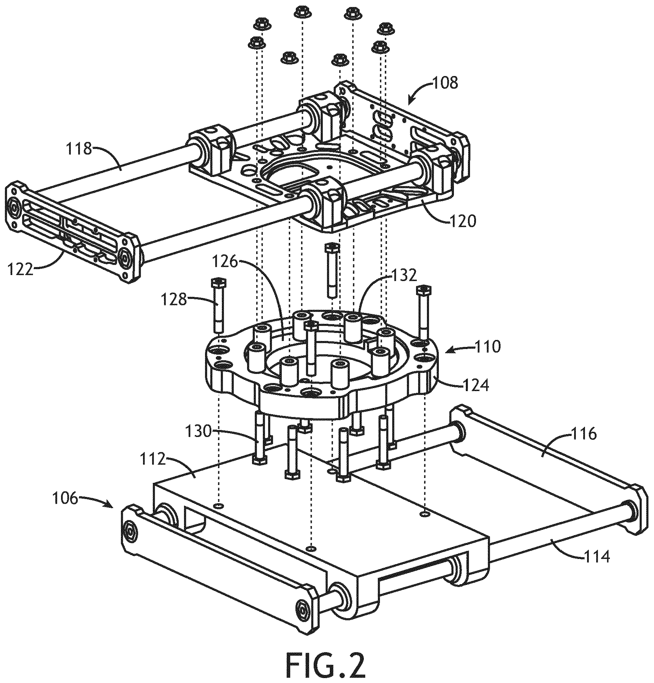

FIG. 2 shows an exploded view of the motion assembly 100. In embodiments, the first subassembly 106 includes a platform 112 translatably mounted to spaced beams 114, such as cylindrical beam tubes. The spaced beams 114 may be attached to opposing frame elements 116, such as frame elements forming part of or attached to the seat tracks. As shown, the first platform 112 slides along the spaced beams 114, and the length of the spaced beams 114 determines the amount of travel of the platform 112. The motion of the platform 112 is linear and parallel to the spaced beams 114. When equipped on the passenger seat, the spaced beams 114 may be oriented parallel to the passenger seat longitudinal axis such that the linear motion operates to move the seat forward or backward.

In embodiments, the second subassembly 108 also includes spaced beams 118 and a second platform 120. The spaced beams 118 may also be cylindrical beam tubes. In the second subassembly 108, the spaced beams 118 are configured to translate relative to the second platform 120. The spaced beams 118 may be attached to frame elements 122, such as frame elements attached to or forming part of the passenger seat. When equipped on the passenger seat, the spaced beams 118 may initially be oriented parallel to the spaced beams 114 of the first subassembly, and after rotational motion from the third subassembly 100, the spaced beams 118 may be oriented at an angle to the spaced beams 114. In some embodiments, the angle may be about 90 degrees to move the seat laterally as compared to the first linear motion.

In embodiments, the third subassembly 110 includes a swivel plate 124 mounted to the first platform 112 of the first subassembly 106, and a swivel ring 126 rotatably mounted to the swivel plate 124. The swivel ring 126 is mounted to the second platform 120 of the second subassembly 108. By mounting the swivel plate 124 and the swivel ring 126 to the two separate first and second platforms 112, 120, the second platform 120 of the second subassembly 108 can be rotated relative to the first platform 112 of the first subassembly 106 such that the spaced beams 118 of the second subassembly 108 can be angled relative to the spaced beams 114 of the first subassembly 106. This configuration provides linear motion in two different directions, with back-and-forth motion in each direction. When equipped on the passenger seat, the passenger seat can be moved from a first location to a second location along a travel path that includes motion in at least two different directions.

In embodiments, first fasteners 128 may be used to secure the swivel plate 124 to the first platform 112, and second fasteners 130 may be used to secure the swivel ring 126 to the second platform 120. Each of the first and second fasteners 128, 130 may be externally threaded bolts received through their respective swivel element and tightened with internally threaded nuts. As shown, the first fasteners 128 may be used to secure the fixed swivel plate 124 to the first platform 112, and the second fasteners 130 may be used to secure the rotatable swivel ring 126 to the second platform 120. Spacers 132 may be used to provide the required space between the fixed swivel plate 124 and the second platform 120 to permit rotation.

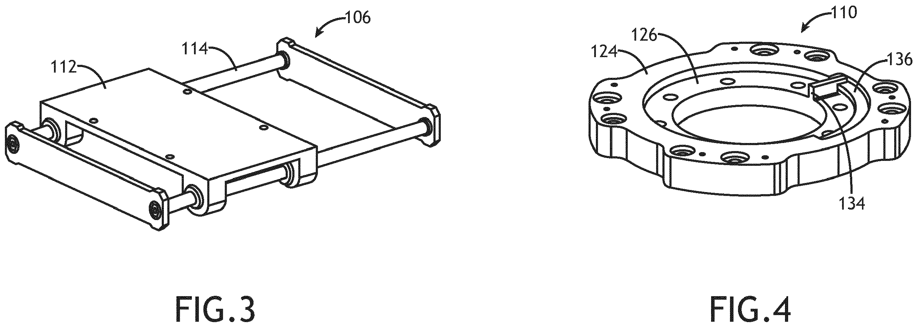

FIG. 3 illustrates the first subassembly 106 and the back-and-forth linear motion of the first platform 112 along the spaced beams 114. Although not shown, the motion can be achieved using a linear actuator coupled between the platform and the spaced beams 114 or the opposing frame elements 116. In use, the linear actuator operates to translate the platform along the spaced beams 114. A similar linear actuator configuration can also be used to control linear motion of the second subassembly.

FIG. 4 illustrates the third subassembly 110. In embodiments, the swivel ring 126 is configured to rotate within the swivel plate 124. The swivel ring 126 has a radially extending feature 134 and the swivel plate 124 has an annular track 136 of a predetermined length determinative of an amount of rotation of the swivel ring 126 relative to the swivel plate 124. The radially extending feature 134 is configured, as the swivel ring 126 rotates relative to the swivel plate 124, to travel within the annular track 136. The length of the annular track 136 can be customized to control the maximum allowable rotation of the swivel ring 126 relative to the swivel plate 124 and consequently the maximum angle between the first and second directions. The position of the annular track 136 on the swivel plate 124 can also be customized to control the start and stop angles of the second subassembly relative to the first subassembly. Although not shown, an actuator capable of rotational motion can be used to control rotation of the swivel ring 126 relative to the swivel plate 124, for example through the action of a Scotch yoke mechanism.

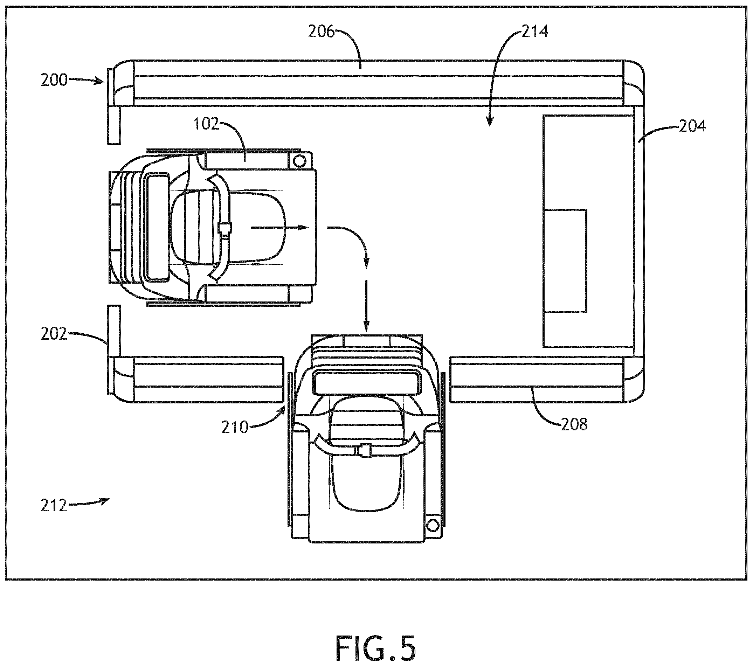

FIGS. 5-7 illustrate a particular application of the motion assembly 100 equipped on a passenger seat 102 positioned in a passenger suite 200. In a non-limiting example, the passenger suite 200 includes a plurality of upstanding walls, for instance a back wall 202, a front wall 204, and two opposing lateral walls 206, 208. A suite entrance 210 may be provided through one of the lateral walls 206, 208. The passenger suite 200 may be positioned alongside an aisle 212, for instance an aircraft longitudinal aisle.

The upstanding walls define an interior space 214. The passenger seat 102 is positioned in the interior space 214. As shown, the passenger seat 102 is movable, by way of the motion assembly described above, between a first position and a second position. In embodiments, the first position corresponds to a travel position for taxi, takeoff, and landing (TTOL) and flight. In other words, the "regular" location of the passenger seat 102 within the passenger suite 200. The second position corresponds to a transfer position in which the passenger seat 102 is positioned within the suite entrance 210. As used herein, "within the suite entrance" refers to a position in which the seat is physically within the suite entrance or adjacent to the suite entrance for instance in the aisle 212, at least partway. The transfer position is used to position the passenger seat 102 in or near the aisle so that a transfer wheelchair can be parked next to the passenger seat 102 to facilitate transfer and a short transfer distance.

As shown in FIG. 5, the motion path of the passenger seat 102 include both linear and rotational motions. More particularly, a first linear motion is provided by the first subassembly (106 in FIG. 1) to move the passenger seat 102 from the first position against the back wall 202 to a position laterally aligned with the suite entrance 210. A rotational motion is provided by the third subassembly (110 in FIG. 1) to rotate the passenger seat 102 approximately 90 degrees so that the passenger seat 102 faces the suite entrance 210. A second linear motion is provided by the second subassembly (108 in FIG. 1) to move the seat into the suite entrance 210, for instance at least partway into the aisle 212. In embodiments, the linear and rotational motions may be performed in sequence wherein the next motion does not start until the previous motion ceases. In other embodiments, at least some of the motions may overlap. The range of motions and angles may be customized depending of the dimensions of the passenger suite, distance to alignment of the passenger seat 102 with the suite entrance 210, etc.

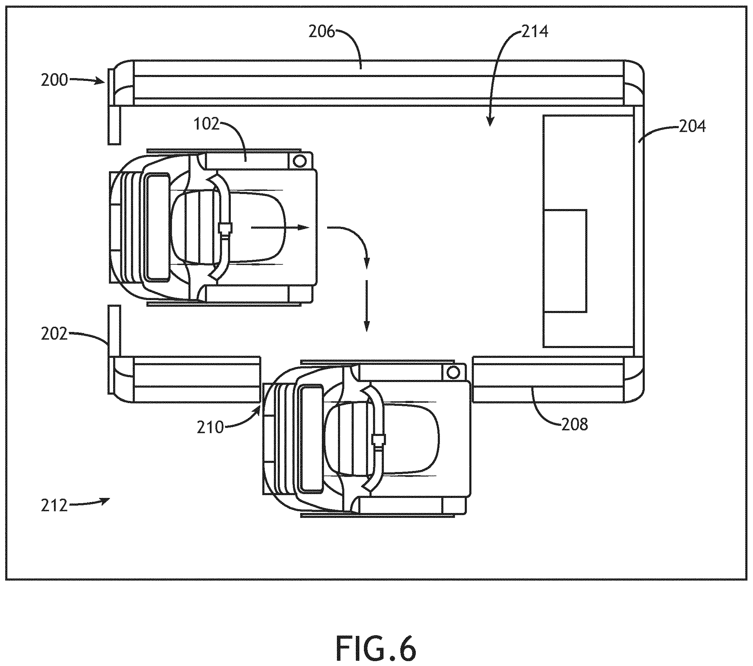

FIG. 6 illustrates an alternative motion path without rotational motion changing the facing direction of the passenger seat 102. This motion path may be utilized, for example, when the aisle does not have sufficient width to accommodate a lateral facing passenger seat transfer and/or the suite entrance 210 is wide enough to accommodate a forward-facing passenger seat 102.

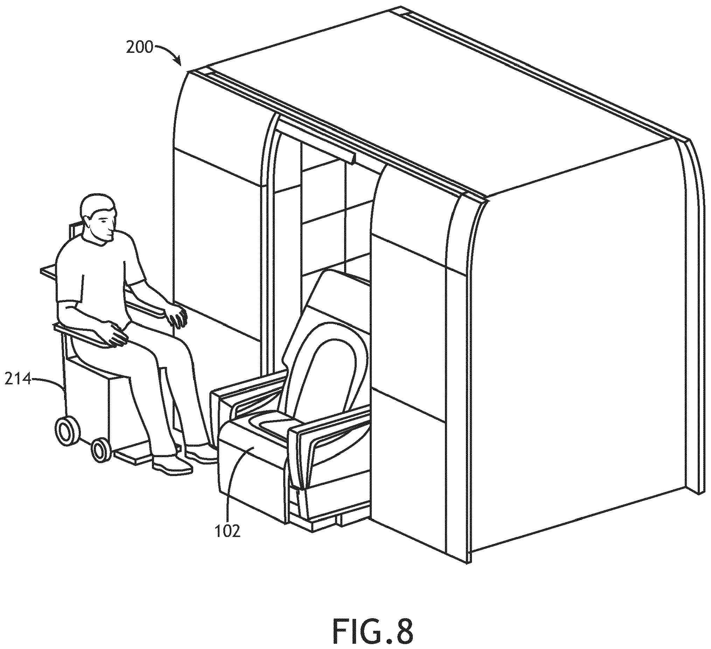

FIGS. 7 and 8 illustrate the first and second positions of the passenger seat 102 relative to the passenger suite 200 and the transfer wheelchair 214 positioned in the aisle proximal to the suite entrance 210.

In some embodiments, a controller is programmed to operate the actuators associated with the first, second and third subassemblies 106, 108, 110 according to preprogrammed instructions. The controller may include at least one processor, memory, and a communication interface. The processor provides processing functionality for at least the controller and may include any number of processors, micro-controllers, circuitry, field programmable gate array (FPGA) or other processing systems, and resident or external memory for storing data, executable code, and other information accessed or generated by the controller. The processor may execute one or more software programs embodied in a non-transitory computer readable medium (e.g., memory) that implements techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A motion assembly (100) for a passenger seat (102), comprising:
a first subassembly (106) for linear motion in a first direction;
a second subassembly (108) for linear motion in a second direction; and
a third subassembly (110) for rotational motion, the third subassembly (110) positioned between and interconnecting the first and second subassemblies (106, 108), wherein an amount of rotational motion of the third subassembly (110) determines an angle of the second direction relative to the first direction.

2. The motion assembly (100) according to claim 1, wherein:
the first subassembly (106) comprises a platform (112) translatably mounted to spaced beams (114);
the third subassembly (110) comprises a swivel plate (124) mounted to the platform (112) and a swivel ring (126) rotatably mounted to the swivel plate (124); and
the second subassembly (108) comprises a platform (120) mounted to the swivel ring (126) and spaced beams (118) translatably mounted to the platform (120).

3. The motion assembly (100) according to claim 2, wherein:
the spaced beams (114) of the first subassembly (106) are components of a first frame assembly attachable to seat tracks; and
the spaced beams (118) of the second subassembly (108) are components of a second frame assembly attachable to the passenger seat.

4. The motion assembly (100) according to claim 2, wherein:
the swivel ring (126) is configured to rotate within the swivel plate (124);
the swivel ring (126) has a radially extending feature (134);
the swivel plate (124) has an annular track of a predetermined length determinative of an amount of rotation of the swivel ring (126) relative to the swivel plate (124); and
the radially extending feature (134) is configured, as the swivel ring (126) rotates relative to the swivel plate (124), to travel within the annular track.

5. The motion assembly (100) according to claim 1, wherein the third subassembly (110) is configured for up to 90-degrees of rotation such that the second direction is orthogonal to the first direction.

6. The motion assembly (100) according to claim 1, wherein the motion assembly (100) is configured for sequential operation in that the first subassembly (106) is configured to operate first to provide linear motion in the first direction, the third subassembly (110) is configured to operate second to provide rotational motion, and the second assembly (108) is configured to operate third to provide linear motion in the second direction.

7. The motion assembly (100) according to claim 6, wherein the third subassembly (110) is configured to operate after linear motion of the first subassembly (106) ceases, and the second subassembly (108) is configured to operate after rotational motion of the third subassembly (110) ceases.

8. A passenger seat assembly, comprising:
a passenger seat (102);
seat tracks (104); and
a motion assembly (100), as claimed in any preceding claim, coupled between the passenger seat (102) and the seat tracks (104), wherein the first subassembly (106) is coupled to the seat tracks (104), and wherein the second subassembly (108) is coupled to the passenger seat (102).

9. A passenger suite (200), comprising:
upstanding walls (202, 204, 206) defining an interior space;
an entrance (210) provided through one of the upstanding walls; and
a passenger seat (102) positioned within the interior space, the passenger seat (102) comprising a motion assembly (100), as claimed in any of claims 1-7, configured to move the passenger seat (102) from a first position within the interior space to a second position within the entrance (210), wherein movement from the first position to the second position includes at least one direction change, and the first subassembly (106) is coupled to seat tracks (104) of the passenger seat (102), and wherein the second subassembly (108) is coupled to the passenger seat (102).
